Europäisches Patentamt

European Patent Office

Office européen des brevets

(19)

(11) Publication number : 0 440 451 A2

# (12) EUROPEAN PATENT APPLICATION

(21) Application number : 91300724.1

(51) Int. Cl.⁵ : G06F 12/08

(22) Date of filing : 30.01.91

(30) Priority : 31.01.90 US 472061

(43) Date of publication of application :
07.08.91 Bulletin 91/32

(84) Designated Contracting States :
DE FR GB IT

(71) Applicant : Hewlett-Packard Company
Mail Stop 20 B-O, 3000 Hanover Street
Palo Alto, California 94304 (US)

(72) Inventor : Garcia, Philip
P.O. Box 9141
Stanford, California 94305 (US)
Inventor : Maasen, Dirk Jan
873 Raintree Court
San Jose, California 95129 (US)
Inventor : Stephanos, Tewelde
1009 E. Duane Avenue
Sunnyvale, California 94086 (US)

(74) Representative : Colgan, Stephen James et al
CARPMAELS & RANSFORD 43 Bloomsbury
Square
London WC1A 2RA (GB)

(54) Cache control during speed changes and floppy access at autospeed.

(57) A microcomputer architecture and method permit deactivation of the internal 8 Kilobyte cache (118) of an Intel 80486 microprocessor (102) during microprocessor effective speed changes. To control the effective speed of the microprocessor (102), a programmable timer (106) sends a pulse train to the hold request pin on the microprocessor (102). During a pulse train period, at one logic level the microprocessor (102) is put into a hold state, whereas at the other logic level the microprocessor (102) is permitted to operate at its normal maximum clock speed. In order to deactivate and restore the state of the internal cache (118), both hardware and software cache control logic (332,336) of the microprocessor (102) is utilized. When the effective speed is to be lowered, a hardware control (342) flushes and disables the internal cache (118) via the hardware cache control logic (332). Upon resumption to the normal (maximum) microprocessor speed, the cache (118) is automatically set to its proper state by the software control (344) via the software cache control logic (336). The "on" state of the cache (118) is determined by the logical "and" relationship between the software and the hardware controls (340,344).

EP 0 440 451 A2

INTEL 80486 µP

PROGRAMMABLE S/W TIMER — 106

ARB LOGIC — 110

PULSE TRAIN

PULSE TRAIN

8K CACHE — 118

ALU — 116

BUS 130

CLOCK — 104

BUS CONTROL LOGIC — 108

FPU — 114

102

~122

~126

S/W SPEED INPUTS:
1. USER
2. BIOS
3. APP S/W
120

HOLD REQUEST INPUT:
1. REFRESH
2. DMA
3. BUS MASTERS
4. OTHERS
124

HOST BUS — 112

X — 128

FIG. 1

# CACHE CONTROL DURING SPEED CHANGES AND FLOPPY ACCESS AT AUTOSPEED

## BACKGROUND OF THE INVENTION

### I. FIELD OF THE INVENTION

The present invention relates to microcomputer architectures, and more particularly, to the control of the microprocessor during speed changes.

### II. RELATED ART

In a personal computer, the central processing unit, or microprocessor, has been given close attention by designers and manufacturers over the years. Microprocessors are continually being designed to operate at higher and higher speeds. Greater processing speeds in microcomputers is necessary because microcomputers are being used more for compute-intensive applications. These applications include, for example, high resolution graphics displays, high performance computer automated design (CAD) workstations, high speed local area networks (LAN), and recently the new Extended Industry Standard Architecture (EISA) peripherals which are being developed to handle 32-bit burst data transfers at up to 33 megabytes per second. Typical microprocessor speeds over a decade ago were 6 or 8 Megahertz (Mhz). Now, typical speeds are 25 or 33 Mhz.

In many microcomputer architectures, it oftentimes becomes necessary to control the speed of the microprocessor. This assertion is especially true with the high speed microprocessors. The speed many times must be slowed down in order for the microprocessor to interact properly with other slower computer components.

An example would be when a high speed microprocessor is reading from a disk drive having a software applications program with copy protection. Software designers have derived many clever ways to protect software programs. Some involve putting non-standard data onto the disk. Then, an algorithm of some sort in the software measures the time that it takes for the personal computer to attempt to read and decipher the non-standard decoy data. Further, when an unauthorized copy is made from a master disk, the non-standard data is copied and placed on the copy in a different manner than the master. Hence, the time for the read of the altered decoy data from an unauthorized copy will be different from that of a master copy. The algorithm detects this difference and does not permit the proper functioning of the bootlegged copy.

When Compaq Computer Corporation of Houston, Texas, U.S.A., began designing higher speed microcomputers, such as those operating at 25 and 33 Mhz, it became necessary to slow down the microprocessor in order for the microprocessor to properly read data from authorized master disks which contained software designed for slower machines, such as those operating at 8 Mhz. When using these copy protected disks in a high speed machine, the algorithm sometimes gets confused and erroneously comes to the conclusion that a copy rather than the master is being utilized. As a result, "autospeed" was developed. In machines with the so-called autospeed, the microprocessor usually has at least two speeds, a maximum speed for usual operation and a slower speed for reading applications software designed for slower machines. Accordingly, during the accesses to the software on a disk, the speed is dropped from the maximum so as not to trip, or activate, the copy protection. After the read has been completed, the machine then resumes its maximum speed. "Autospeed" is the combination of a normal maximum speed and a slower speed for accessing a disk drive.

Many techniques may be used to manipulate the speed of a microprocessor. One conventional technique uses external control pins on the microprocessor which enable a direct memory access (DMA) device, a refresh device, an external bus master, etc., to take complete control of the microprocessor bus, or host bus. In response to a hold request from such devices, the microprocessor usually floats most of its input and output pins until the hold is deasserted.

To control the microprocessor speed, some conventional microcomputer architectures by using a timer circuit, such as an Intel 8254 manufactured by the Intel Corporation, California, U.S.A., or equivalent, send a pulse train to the hold request pin on the microprocessor. Consequently, at one logic level the microprocessor is put into a hold state, whereas at the other logic level the microprocessor is permitted to operate at its usual clocked speed. Thus, the average speed over a pulse train period is reduced. In other words, the "effective" speed of the microprocessor can be manipulated by the pulse train's duty cycle from the timer circuit.

The above conventional technique has been utilized successfully in personal computers utilizing the Intel 80386 microprocessor. The functioning of the 80386 can be successfully stopped for brief periods to thereby alter the effective speed of the microprocessor. The technique is further operative when the 80386 has been interfaced with a fast external cache to increase speed.

However, although the pulse train technique offers advantages such as the ease for implementation with available conventional microprocessors, it does have inherent problems when used with the latest high speed microprocessors, such as the Intel 80486 microprocessor. The Intel 80486 micro processor was designed to improve the speed of the 80386. It comprises an on-chip 8 Kilobyte (KB) cache.

The inventor has determined that when using the Intel 80486 microprocessor, the microprocessor even after a hold request will continue to execute code and manipulate data from its internal 8K cache. It will do so until the microprocessor needs access (code or data miss) to the host bus at which time the microprocessor will then hold if the hold request is still in effect. This operation after a hold request changes the effective speed of the microprocessor from that expected. Such an effect makes the effective microprocessor speed uncontrollable.

SUMMARY OF THE INVENTION

The present invention represents a substantial effort on the part of several microcomputer designers and engineers over months to overcome the problems and deficiencies in the prior art related to controlling the speed of a microprocessor in a personal computer.

One embodiment of the present invention is a microcomputer architecture for disabling the on-chip 8 Kilobyte cache of an Intel 80486 microprocessor during effective speed changes of the microprocessor. A computer component is connected to the microprocessor which requires interaction with the microprocessor at a slower speed (second speed). A programmable timer sends a pulse train with a programmed duty cycle to the hold request input of the microprocessor, causing the microprocessor to operate at either a normal speed (first speed) of for example 25 or 33 Megahertz (Mhz) or at a lower effective speed (second speed) of for example 6 or 8 Mhz.

A hardware control is connected to the FLUSH and KEN control inputs of the 80486 microprocessor. The hardware control flushes and disables the cache when the microprocessor changes its effective speed from the first speed to the second speed.

A software control programs bits 29 and 30 of the control register CRO of the 80486 microprocessor. The bits are encoded with the proper state of the cache. The cache assumes the encoded state when the effective speed of the 80486 microprocessor changes from the second speed to the first speed.

As a result of the present invention, the effective speed of the 80486 microprocessor is measurable, controllable, and certain. Moreover, both internal and external software each have their own route of communication with the 80486 microprocessor.

Another embodiment of the present invention is a method in a microcomputer architecture for disabling the internal 8 Kilobyte cache of an 80486 microprocessor and restoring it to its proper state. The method involves transmitting a first signal to the control inputs on the microprocessor when the effective speed of the 80486 microprocessor is to be reduced, causing the cache to be flushed and turned off upon receipt of the first signal. A second signal is transmitted to the control inputs of the microprocessor when the effective speed of the microprocessor is to be restored, causing the cache to be in an on state upon receipt of the second signal, and restoring the state of the cache to the state encoded by bits 29 and 30 of the control register CRO of the microprocessor.

Because of the method, the effective speed of the 80486 microprocessor is measurable, controllable, and certain. Furthermore, no interaction is required between the microprocessor and the system memory (usually DRAM) to store information relating to the cache state because the state is implicitly stored and continually updated within the control register CRO.

Further objects and advantages of the present invention will become apparent to one skilled in the art upon examination of the following drawings and detailed description. It is intended that any additional objects and advantages be incorporated herein.

BRIEF DESCRIPTION OF THE DRAWINGS

The present invention as defined in the claims can be better understood with reference to the text and to the following drawings.

Figure 1 shows the microcomputer environment in which the present invention is implemented,

Figure 2 illustrates the pulse train sent from programmable S/W timer 106 which controls the effective speed of the Intel 80486 microprocessor 102, where the horizontal axis defines time and the vertical axis defines the state of the 80486 microprocessor,

Figure 3 shows the present invention as it is implemented in the environment of Figure 1, and

Figure 4 illustrates a high level diagram of the effective logical relationship between the H/W and S/W controls of the present invention.

DESCRIPTION OF PREFERRED EMBODIMENT

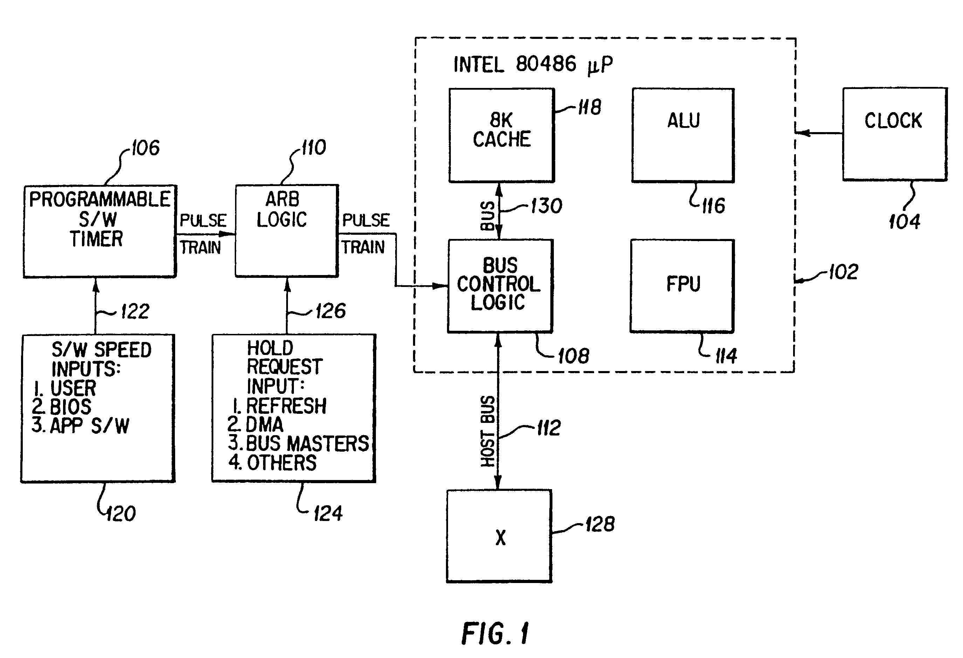

Figure 1 illustrates the environment in which the present invention is implemented. Initially, the environment for the present invention will be described to facilitate a better understanding of the invention.

In Figure 1, an Intel 80486 microprocessor 102 operates with clock 104 at a clock frequency of, for example, 25 Mhz or 33 Mhz. The 80486 microprocessor 102 is interacting with a computer component X, which requires a slower microprocessor speed. An example of a microcomputer component X requiring a slower speed would be a floppy disk drive with an application software program which has copy protection and which was designed for operation on a slower microcomputer, such as for example, a machine operating at 6 or 8 Mhz.

In order to slow the speed of the 80486 microprocessor 102, a signal in the form of a pulse train is transmitted from a programmable S/W timer 106 to a bus control logic 108 in the 80486 microprocessor 102. During a hold request, which is acknowledged by the 80486 microprocessor 102, the microprocessor 102 does not access a host bus 112. However, the pulse train signal from the programmable S/W timer 106 must pass through an arbitration logic 110 before reaching the 80486 microprocessor 102. The arbitration logic 110 prioritizes the hold request from the programmable S/W timer 106 along with the hold requests from a number of other microcomputer components, such as a bus master (not shown). Other microcomputer components may require a hold state during a memory (usually DRAM) refresh, a direct memory access (DMA), or some other function.

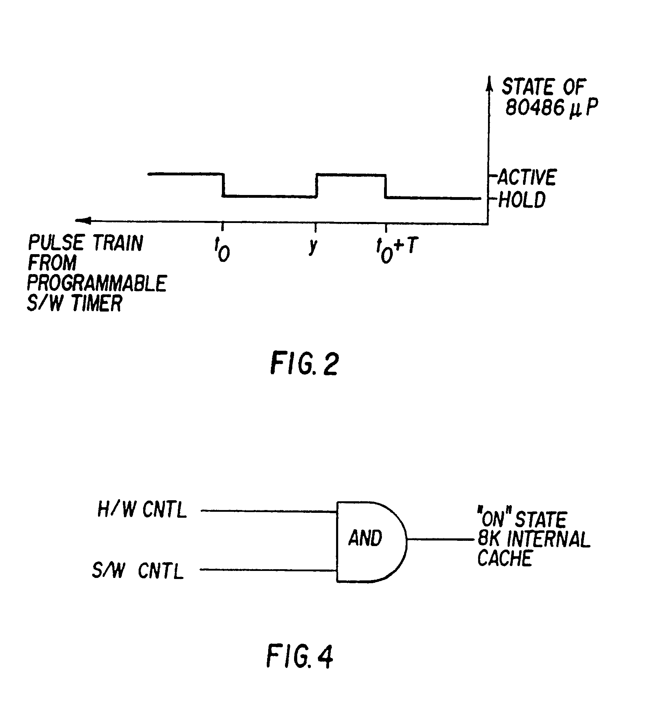

When the speed of the microprocessor 102 is lowered, in actuality only its "effective" speed is changed. The concept of effective speed can be understood by examining Figure 2. Figure 2 illustrates the pulse train which is generated by the programmable S/W timer 106. During a period T, the pulse train causes the 80486 microprocessor 102 to be in a hold state for an amount of time y and active for an amount of time equal to (T-y). In other words, if the 80486 microprocessor 102 is being clocked at 25 Mhz in an embodiment of the present invention, the microprocessor 102 does not access the host bus 112 during the time y, but functions normally at its clock speed of 25 Mhz during the time (T-y).

As a result, an effective microprocessor speed is achieved which is equal to the average speed over the pulse train period T. More specifically, to achieve an effective speed of 8 1/3 Mhz, a pulse train must be sent from the programmable S/W timer 106 with an active state of 1/3 T and a hold state of 2/3 T.

A floating point unit (FPU) 114 and an arithmetic logic unit (ALU) 116 of the microprocessor 102, even during a hold state, can continue to execute code and manipulate data from the microprocessor's internal 8 Kilobyte (Kb) cache 118. The microprocessor 102 and its internal cache 118 could be operative until the microprocessor 102 needs access (due to code or data miss) to its host bus 112. At such time, the microprocessor 102 then ceases execution if the hold state is still in effect. This operation during a hold state changes the effective speed of the microprocessor 102. Such an effect is adverse because it makes the effective microprocessor speed uncontrollable and unpredictable.

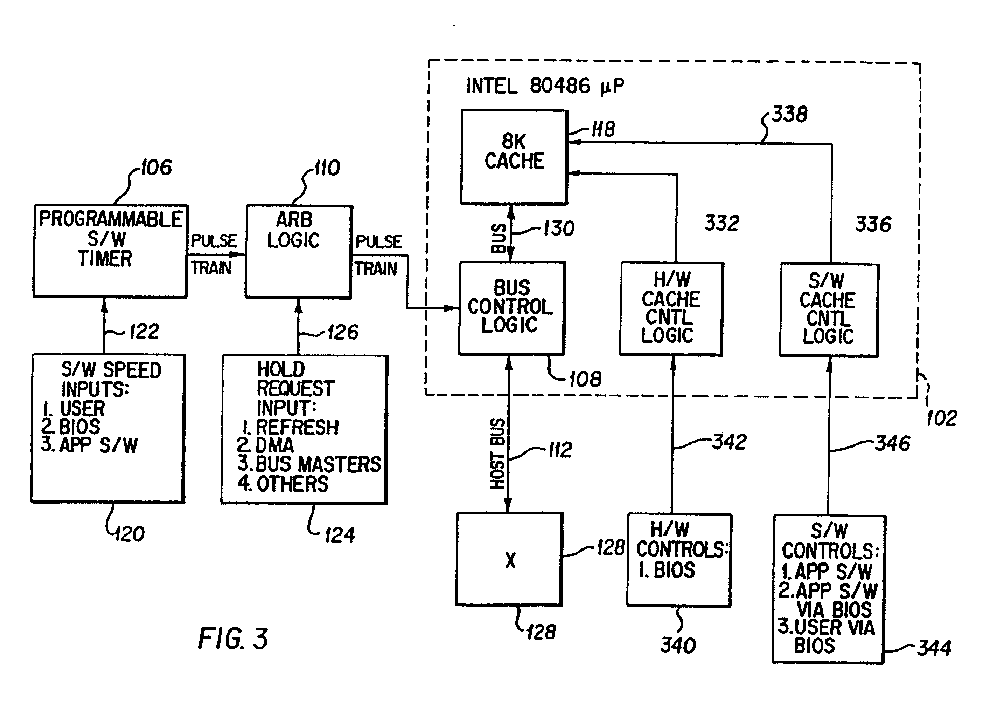

Figure 3 shows the present invention as it is implemented in the environment of Figure 1. The state of the internal 8K cache must be disabled whenever the effective speed is lowered to accommodate the speed requirements of the computer component X. The component X could be, for example, a floppy disk drive having an application software program with a copy protection timing algorithm.

The architecture and method of the present invention uses both a hardware (H/W) and software (S/W) approach to control the internal 8K cache of the Intel 80486 microprocessor 102. The 8K internal cache 118 can be controlled by the BIOS via an I/O control port (H/W ; not shown) during an access to an external computer component X. The control bits at this port are the FLUSH (not shown) and the KEN (not shown). FLUSH is active low and is asserted only briefly, or pulsed, to flush the cache 118. KEN is active low and must be asserted throughout low speed operation to keep the cache 118 disabled. The 8K internal cache 118 can also be controlled via an 80486 microprocessor control register CRO (not shown). The bits of control register CRO which are of concern are bit 29 (not write through) and bit 30 (cache disable).

During the time when the cache 118 is capable of being active, or in other words, when the 80486 microprocessor 102 is operating at its normal speed (usually maximum speed), the control register CRO determines the actual state of the cache 118.

To flush and disable the 8K internal cache 118, the BIOS of block 340 can assert a hardware control (H/W CNTL) signal on a line 342 signal to the hardware cache control logic 332 contained in the 80486 microprocessor 102. The hardware cache control logic 332 in the 80486 microprocessor 102 is accessed via the FLUSH and KEN bits of the I/O control port (H/W ; not shown).

During the time when the 8K internal cache 118 is flushed and disabled due to the hardware cache control logic 332, a software control (S/W CNTL) signal from a software control of block 344 continuously programs the S/W cache control logic 336 via a line 346. The software controls could include the following : (1) the application software, (2) the BIOS pursuant to the application software, or (3) the user. This programming indicates what the current state of the 8K internal cache 118 should be when the cache 118 is reenabled.

If the S/W cache control logic 336 is not affected during the time when the cache 118 is disabled, then the current state of the cache 118 when re-enabled is the previous state of the cache 118 before the cache 118 was flushed and disabled via the BIOS of block 340.

When the cache 118 is to be re-enabled, the hardware control signal on line 342 is deasserted. The cache 118 then observes the bits 29 and 30 of control register CRO of the S/W cache control logic 336 to determine what state to assume. The cache 118 then assumes the state dictated by the control register CRO, which is software programmed. Hence, the cache state is automatically determined.

Figure 4 illustrates a high level diagram of the effective logical relationship between the H/W and S/W controls signals on respective lines 342 and 346 of the present invention. For the cache 118 to be in an "on" state, both the H/W and S/W controls must approve of the state. In other words, either of the controls or both of the controls could turn the cache 118 to an off state.

It should be understood that the present invention is not limited to its preferred embodiments, and that the examples presented above are merely for the purposes of illustration. The scope of the present invention should therefore be interpreted by the following claims as defined by the foregoing figures and text.

## Claims

1. A microcomputer architecture for disabling the on-chip 8 Kilobyte cache (118) of an 80486-type microprocessor (102) during microprocessor speed changes comprising the following :

an 80486-type microprocessor (102) having an 8 Kilobyte internal cache (118) and operating at a first speed,

a computer component (128) connected to said microprocessor and requiring interaction with said microprocessor (102) at a second speed which is slower than said first speed,

a timer (106) connected to the hold request of said microprocessor (102) and adapted to transmit first and second pulse trains to said hold request to thereby cause the microprocessor (102) to operate at an effective speed corresponding to said first and second speeds,

a hardware control (340) in communication with the FLUSH and KEN control inputs of said microprocessor (102), said hardware control (340) adapted to flush and disable the said cache (118) upon a change in effective speed of said microprocessor (102) from said first speed to said second speed, said hardware control (340) adapted to re-enable the said cache (118) upon a change in effective speed of said microprocessor (102) from said second speed to said first speed, and

a software control (344) in communication with the control register CRO of said microprocessor (102) and adapted to set the proper state of the said cache (118) in said register CRO (336), wherein said cache (118) assumes said proper state upon a change in effective speed of said microprocessor (102) from said second speed to said first speed.

2. A microcomputer architecture according to claim 1, wherein said hardware control (340) is the BIOS.

3. A microcomputer architecture according to claim 1, wherein said software control (344) is the BIOS operating under the direction of applications software.

4. A microcomputer architecture for disabling the on-chip 8 Kilobyte cache (118) of an 80486-type microprocessor (102) upon a microprocessor effective speed change from a first speed to a second speed wherein said first speed is higher than said second speed and for re-enabling said cache (118) upon a microprocessor effective speed change from said second speed to said first speed, comprising the following :

(1) a hardware means (340,342) for flushing and disabling said cache (118) during said second speed and for re-enabling said cache (118) during said first speed,

(2) a software means (344,346) for defining the state of said cache (118) upon said re-enabling by said hardware means (340,342).

5. A microcomputer architecture according to claim 4, wherein said hardware means (340,342) includes the FLUSH control of said microprocessor (102).

6. A microcomputer architecture according to claim 4, wherein said hardware means (340,342) includes the KEN control of said microprocessor (102).

7. A microcomputer architecture according to claim 4, wherein said software means (344,346) includes bit 29 (not write through) and bit 30 (cache disable) of said control register CRO (336) of said microprocessor (102).

8. A method for disabling the internal 8 Kilobyte cache (118) of an 80486-type microprocessor (102) and restoring it to its proper state, wherein the effective speed of the microprocessor (102) is controlled by a pulse train timer (106) connected to the hold request input of said microprocessor (102), comprising the following steps :

(a) transmitting a first signal to a control input (342) on said microprocessor (102) when said effective speed of said microprocessor (102) is to be reduced,

(b) causing said internal cache (118) to be in an off state upon receipt of said first signal by said control input (342),

(c) transmitting a second signal to said control input (342) of said microprocessor (102) when said effective speed of said microprocessor (102) is to be restored,

(d) restoring the state of said internal cache (118) to the state encoded by a control register (336) of said microprocessor (102).

9. A method according to claim 8, wherein said control input (342) includes the Flush control input.

10. A method according to claim 9, wherein said control register (336) is control register CRO and wherein bits 29 (not write through) and 30 (cache disable) of said control register CRO (336) encoded with the said state of said cache (118).

FIG. 1

CLOCK 104

INTEL 80486 μP 102

ALU 116

FPU 114

8K CACHE 118

BUS 130

BUS CONTROL LOGIC 108

HOST BUS 112

X 128

PULSE TRAIN

ARB LOGIC 110

HOLD REQUEST INPUT:
1. REFRESH
2. DMA
3. BUS MASTERS
4. OTHERS
126 124

PULSE TRAIN

PROGRAMMABLE S/W TIMER 106

S/W SPEED INPUTS:
1. USER
2. BIOS
3. APP S/W
122 120

STATE OF
80486 $\mu P$

ACTIVE
HOLD

PULSE TRAIN
FROM
PROGRAMMABLE
S/W TIMER

$t_0$  y  $t_0+T$

FIG. 2

H/W CNTL

S/W CNTL

AND

"ON" STATE
8K INTERNAL
CACHE

FIG. 4

FIG. 3

EP 0 440 451 A2